# EUROPEAN PATENT APPLICATION

(11) **EP 4 137 978 A1**
(43) Date of publication of application: **22.02.2023**
(21) Application number: 21192017.8
(22) Date of filing: 18.08.2021
(51) Int. Cl.: G06F 21/62, H04L 65/40, H04L 9/40

(54) **ENHANCED DATA SECURITY THROUGH COMBINATION OF ENCRYPTION AND VERTICAL FRAGMENTATION OF TABULAR DATA**

(71) Applicant: Oroundo Mobile GmbH - Podruznica Zagreb, 10000 Zagreb (HR)
(72) Inventor: BULATOVIC, Igor, Zagreb (HR); RADIC, Dejan, Zagreb (HR); PEULIC, Dejan, Zagreb (HR); KUKIC, Dejan, Zagreb (HR); TOMIC , Sinisa, Zagreb (HR); SKVORC, Dejan, Zagreb (HR); GROS, Stjepan, Zagreb (HR)
(74) Representative: Vitezica, Suzi

(57) **Abstract**

The invention describes a middleware system for securing data storage on multiple storage providers comprising Metadata Store, Fragment Access Layer, Data Access Interface and the Keyring. The Metadata Store is used for provisioning instances of vertically fragmented databases on storage provider's side and mapping of obfuscated names, Fragment Access Layer for fragmenting and encrypting operations, Data Access Interface performs authorization for accessing the resources and the Keyring for storage of the encryption keys.

## Description

### FIELD OF INVENTION

Present invention relates to data security protocol that combines encryption and vertical fragmentation of tabular data.

### BACKGROUND OF THE INVENTION

Modern data storage providers such as Cloud Service Providers are generally accepted as an option for data storage. It is generally believed that they provide secure storage. However, on the other hand, data leaks are reality and represent unwanted events for storage of sensitive data.

Therefore in order to mitigate these issues, data security protocols became extremely important. The goal of those protocols is to enhance the confidentiality and provide appropriate data protection mechanisms. Apart from confidentiality, integrity and availability are also aspects that are have to be protected. In general, encryption algorithms are viewed as a main mechanism for data confidentiality protection when outsourcing data storage.

There are internal and external entities that can represent a threat. Dealing with potential threats is the purpose of every security service. The following adversaries can potentially be the source of unauthorized access to applications and data: attackers that can abuse vulnerabilities in different systems, service providers themselves (given that the entire infrastructure is under the control of the service provider, service provider may abuse this control to access the data), hostile governments (data access is enabled by using legal mechanisms of the country and its institution).

Attackers can be divided into external and internal. Internal attackers are usually employees or other hired companies and persons with authorized access. To fully reconstruct records, external attacker must break the authorization barrier to all the fragment locations and perform appropriate assembly of records. On the other hand, internal attackers, depending on their motives can perform various attacks on confidentiality, integrity, and availability.

Service providers who possess the hardware, wherein data is stored, can access that data directly on storage media. Existing trust issues from a security and privacy perspective are grounded on the following facts: lack of transparency and objective assurance by service providers that the data and communication are truly encrypted, geographic location and jurisdiction where data resides are not necessarily known to the owner of the data, data is usually stored on a single service provider, one service provider acts as a reseller of other service providers, contradictory legislation between data owners and service providers.

At the moment, there are several solutions available that offer the data protection mechanism for cloud storage. For example, CN109033367 Attribute vertical cut multi-cloud storage method for two-dimensional table files (Application Date: July 26.2018). The invention discloses an attribute vertical cutting multi-cloud storage method for two-dimensional table files, belonging to the technical field of data information security. However, this solution does not provide encryption which makes this storage method still vulnerable to attacks.

Furthermore, CN1017154945 Multi-cloud fragmentation safety storage method and multi-cloud fragmentation safety storage system based on erasure coding (Application Date: May 31, 2017) discloses a multi-cloud fragmentation safety storage method and a multi-cloud fragmentation safety storage system based on erasure coding. This method, however does not work with tabular data and has therefore very limited application.

WO2019/015598 Hybrid-cloud data storage method and apparatus, related device, and cloud system (Application Date: July 18, 2018; Priority Date: July 19, 2017) describes the system that fragments and encrypts the data, but it is not applicable to the structured relation databases.

In conclusion, none of these methods work with structured data in the tabular form. Therefore, there is need for the solution for secure storage of the data in the tabular form which includes encryption protocol. The proposed invention solves this problem by introducing the vertical fragmentation along with encryption. Vertical fragmentation was previously used to enhance performance, but security-wise aspects should not be neglected. Design of such solution deals with security-utility trade-off. Introduction of traditional security mechanisms, such as encryption, effectively reduces performance and search flexibility of the solution, but improves the security.

The proposed invention offers solution that overcomes above mentioned drawbacks.

### BRIEF DESCRIPTION OF THE DRAWINGS

Figure 1 Metadata obfuscation.
Figure 2 Middleware consisting of Metadata Store, Fragment Access Layer, Data Access Interface.
Figure 3 Metadata Store using mapping of obfuscated names for the purpose of metadata obfuscation.
Figure 4 Unique Record Identifier (URI) concept.

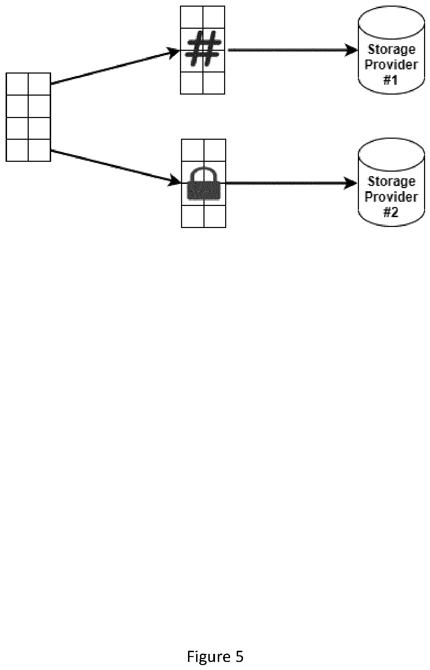

Figure 5 Hash value scheme.

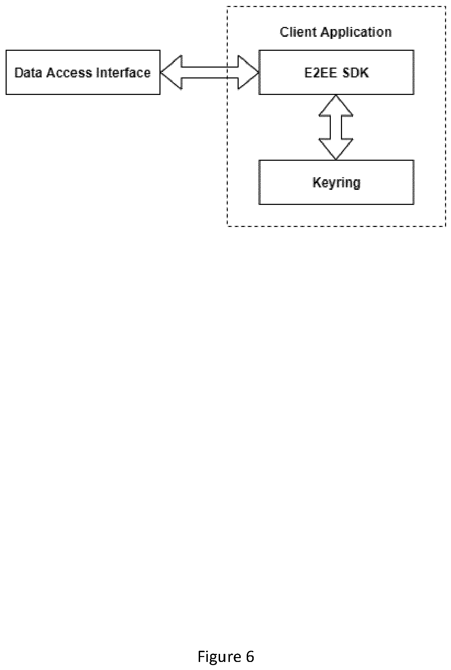

Figure 6 E2EE SDK i connected to Data Access Interface by using appropriate protocols.

### DETAILED DESCRIPTION OF INVENTION

The proposed solution works with structured data presented in tabular structure. Tabular data structure is further comprised of rows and columns. Multiple tables are united in a relational database. Organizing data into this form is a usual concept of structuring the data. Every row of the data in this case represents a record. Record is rounded logical structure that represents real world entity.

By enabling process of vertical fragmentation, record's integrity is temporarily suspended, while division on sub-units is conducted on physical layer. Fragmentation as a concept has two different forms: horizontal and vertical. Horizontal fragmentation is a separation of different rows or records, while vertical fragmentation deals with columns. By dividing a table into vertical fragments (or only fragments) and placing them on different jurisdictional or physical locations, risk of compromising the entire database is significantly reduced. Reason for that is the fact that probability that adversary will compromise all of the fragments is significantly reduced. This is exemplified in the Table 1 which contains information about person's first and last name, e-mail and associated net worth.

**Table 1**

| **First_name** | **Last_name** | **Email** | **Net_worth** |
|---|---|---|---|
| John | Smith | info@smith.com | $5m |
| John | Doe | doe@doe.com | $3m |

After fragmenting the table above to 2 fragments, the result would be 2 tables with 2 columns.

**Fragment #1**

| **First_name** | **Net_worth** |
|---|---|
| John | $5m |
| John | $3m |

**Fragment#2**

| **Last_name** | **Email** |
|---|---|
| Smith | info@smith.com |
| Doe | doe@doe.com |

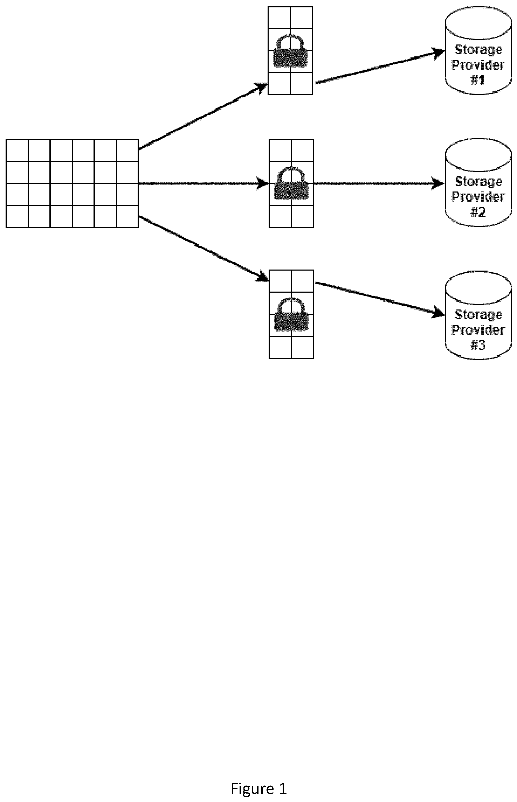

As it can be seen from the example, potential adversary would have only partial information about the personal information contained in the database. If there are multiple records, ability to distinguish between different persons drops significantly. In addition, some of the columns can be encrypted, thus improving the security of the system. Fragmentation and encryption are performed to minimize the information adversary can infer from the data, thus making the data less valuable. Metadata obfuscation as a concept represents an additional security protection (Figure 1). Effectively, it reduces the attack surface and ability of adversary to gain more information about the underlying data.

To enhance the indistinguishability of the fragments, fragmentation should be done in appropriate way. For example, placing the full name and net worth on a single fragment without encryption does not improve the data protection. That is why users have to specify the privacy constraints. Selection of cryptographic algorithms and specification of privacy constraints are therefore different from case to case.

Fragmented database should keep the read/write operations functional. Write operation should be executed so that every record is disassembled correctly to fragments. While every read operation or query is executed in parallel on different servers and partial results are assembled and returned to requester.

### Provisioning

Fragmented data is written on multiple fragment locations. Those locations represent different storage providers. Storing the data by using the provider services requires certain conditions to be met. Firstly, database schema is defined, and data is classified by sensitivity. Output of the sensitivity analysis should be the definition of fragments for different tables in the schema. Breaking a table into a set of fragments depends on the information and security needs. After determining the fragments, fragmented schema is automatically provisioned on fragment locations. Provisioning is done by a architectural service called provisioner, which is authorized to access the fragment locations. Provisioner has the unified access to different storage providers. Metadata information is written in Metadata Store. Every fragment location or storage provider contains a part of metadata for its vertical fragments.

### Middleware

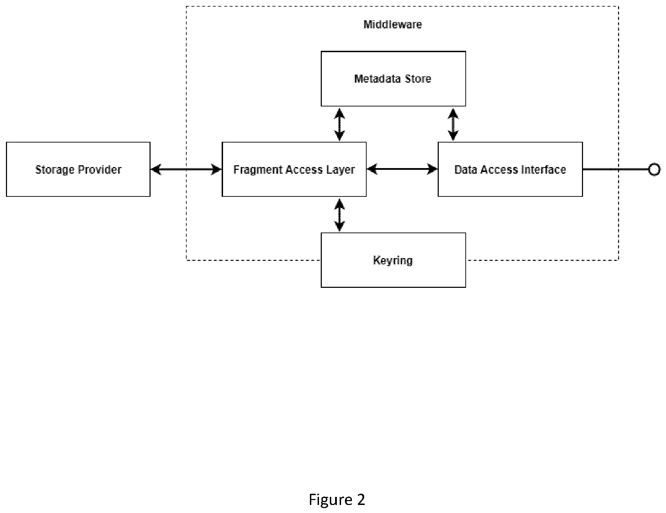

Middleware represents a deployment unit which is placed on trusted location. It consists of Metadata Store, Fragment Access Layer, Data Access Interface. Keyring can be either internal or external. Middleware is responsible for maintaining connections to Storage Provider's on storage side and transforming data into standardized formats on the client's side (Figure 2).

### Metadata Store

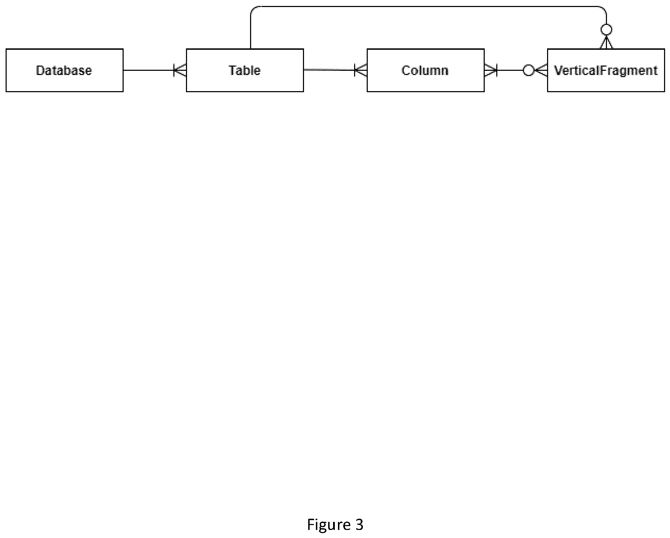

Metadata Store contains description of all relevant objects for the functioning of the system, or more precisely, middleware. Both Fragment Access Layer and Data Access Interface interact with Metadata Store which is part of middleware. Metadata definition or schema definition is an initial step in database design. Provisioning happens after defining metadata and placing it in Metadata Store. Provisioning step creates instances of fragment databases on storage provider's side. A database contains multiple tables which contain multiple columns. A vertical fragment contains multiple columns from a single table. Metadata Store also contains mapping of obfuscated names for the purpose of metadata obfuscation (Figure 3).

Metadata Store is realized as a relational database which is kept on middleware. Its metamodel represents a metamodel of relational database. Database and table are defined by their respective names or identifiers. Columns have an additional property which defines a type. In addition, if needed, columns can have a mapping from plaintext and obfuscated column names for the purpose of metadata obfuscation. Vertical fragments have either access credentials for specific fragment storage provider, or identifier of storage provider. Metadata Store exposes its functionalities through standardized access interface for relational databases.

### Fragment Access Layer

Fragment Access Layer has access to different fragment locations placed at storage providers. This layer is responsible for fragmentation and encryption operations. When write operations are performed, data is received from Data Access Interface and translated into format which storage provider expects. Fragments are updated as distributed transactions by taking care of replication. Similarly, on read operations, fragment data is assembled and moved towards Data Access Interface.

### Cross-fragment record consistency

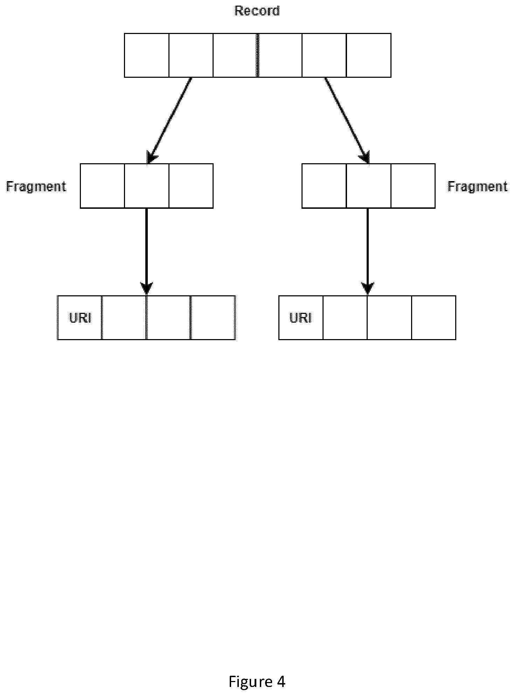

To enable consistency between records in different fragments, Unique Record Identifier (URI) concept is introduced. Its purpose is to uniquely identify a record across different fragments. Parts of record in different fragments are associated with each other by having the same Unique Record Identifier. It enables assembly of whole record, when fetching it from different fragments on Fragment Access Layer. On disassembly of the record, every record part is marked with URI (Figure 4).

Metadata is used as a template for disassembling the record to fragments. Subsets of record parts are placed on different fragment locations.

### Replication

To improve availability aspects of the data, replication as a concept is enabled. The goal is to make data redundant to expand number of sources where data can be found. If fragments of data are stored on only one storage provider, data availability is fully depending on it, thus, making it a single point of failure. To overcome that, fragments can be replicated to more than one storage provider. Fragment Access Layer distributes the fragmented data as multiple replicas on different fragment locations. It is also enabling the maintenance of consistency of redundant storage sources.

Redundancy is achieved on a column level. Column data can be stored on multiple vertical fragments. Vertical fragments are directly associated with a storage provider or location. Write operations are implemented to maintain consistency of the data across vertical fragments, which read operations read the data from any of the vertical fragments containing appropriate column.

### Distributed transactions

A single record has its parts in multiple fragments. Those parts have to be settled in different fragments atomically on any write operation. Record consistency can not be broken, which means record parts are either written on all location or they are reverted or rolled back to previous state. That is achieved through distributed transaction mechanism which takes record parts and commits them to appropriate locations.

By introducing replication as a concept, a single record part is written on multiple fragment locations, thus enhancing the availability if one of fragment locations is unavailable. To maintain record consistency, record part should be written to at least one location. Write operation can be marked as successful if single location is written, and other location write operations can happen eventually. By enabling this behavior, eventual consistency of the record is introduced. Consequently, when data is being read, it should be read from all fragment location replicas to overcome possible inconsistencies that can happen meanwhile when not all replicas are updated. To overcome potential problems with consistency, newest update is taken as a source of truth.

### Query operations

Read operations or queries are executed in distributed environment with a goal to return appropriate data set of records. Query execution plan includes appropriate assembly of records regardless of replication strategy, as previously mentioned. Parts of queries are also executed at storage provider's side on fragment locations to offload the middleware. When partial results are returned to middleware, additional operations can be performed on them which results in assembly of the data set.

### Cryptographic mechanisms

Encryption, hash values and metadata obfuscation are additional mechanisms which aim to improve the overall security of the solution.

### Encryption

Encryption as security mechanism is introduced to improve confidentiality. The idea is to encrypt columns whose data is marked as sensitive during metadata specification. Encryption is performed with standardized algorithms. Process of encrypting is executed at Fragment Access Layer. When data is written on storage providers, columns marked as sensitive are encrypted. Key management of encryption keys is performed on Keyring. Encryption is performed on a single column for every record or row in a table. Column's type is changed to binary if column is encrypted. Proper type mapping is written in Metadata Store.

Search on encrypted data directly is not a functional solution. To resolve the search issue, deterministic encryption as a concept is introduced. Deterministic encryption means that a single key is used for encryption of all the records in the column. Effectively, ciphertext value is going to be the same for the same plaintext values. Therefore, equality search is enabled if deterministic encryption is used. On the other hand, non-deterministic encryption means that different records have different keys, or encryption is performed with salts.

### Hash values

Protection of integrity, as well as equality search as a functionality are enabled by using the hash value scheme. Hash values of records from a column can be placed on a one storage provider, while the non-deterministically encrypted value can be placed on the other. As a result, equality check can be done on one storage provider, while fetch of data can be done on the other. Additionally, placing hash value on other storage provider enables tamper-proof scheme, since changes can be detected by comparing the hash values.

When query operation with restriction is performed, the compare value is also hashed. That enables the equality comparison operation to be performed.

### Metadata obfuscation

As additional protection layer, metadata obfuscation as a concept is introduced. By obfuscating names of tables and columns, including column types, potential attacker would know less about the structure. As a result, efforts towards recognizing more about the data have additional obstacle. Database metadata refers to names of tables, columns, indices, foreign keys and data types. Metadata elements are obfuscated either by tokenization or cryptographic mechanisms such as encryption or hash functions. If tokenization is used, mapping of obfuscated and real values can be stored in Metadata Store. Mapping is implemented as a key-value store enabled in both directions. Real column name values can be obtained by having the obfuscated ones and vice versa. Obfuscation is performed on middleware where query and command rewriting operations are executed before sending them to the fragment locations.

### Data Access Interface

Data Access Interface is placed in the middleware and enables flexible access to the data. Client applications behave as if fragmentation and encryption are not being done at the middleware. It supports commonly used and standardized data formats. In addition, it performs authorization for accessing the resources. Granular authorization is enabled on column level, where access to certain columns or keys in Keyring are enabled to client's applications.

Data exposure is performed through network and database access protocols. In addition, transport confidentiality protection through encryption is performed by using standardized protocols.

### Keyring

Keyring, also known as key store is a mechanism that stores known encryption keys. It is closely attached to middleware either as internal or external service. Encryption keys are stored in alias-key manner, where alias represents a unique identifier of the key by combining name of table with the name of column. Encryption can be done with same and different keys for each record. If same keys are used, equality search is enabled, because same plaintexts have same ciphertexts. On the other hand, different encryption keys provide higher security. That represents a mechanism for tunning up the security-utility trade-off. In addition, keyring supports the different symmetric cryptographic algorithms, based on the user's choice.

### E2EE SDK

For highly sensitive data, there is an option to use on-device encryption, known as End-to-End encryption (E2EE) implemented as Software Development Kit (SDK). It is designed as a software library or module which functions on different devices which support different technologies. A subset of columns in a table can be marked as highly sensitive. Encryption of the subset of columns is performed inside of client's application which uses the E2EE SDK as a module. E2EE SDK is initialized with configuration which defines the inputs and the outputs.

Apart from middleware, that is another place where encryption can be performed. Consequently, it can be performed either on middleware or on E2EE SDK, or on both locations. That opens the possibility for partial encryption where data can be partially encrypted on either of the locations.

Architecturally, E2EE SDK is connected to Data Access Interface by using appropriate protocols. Encryption operations performed inside E2EE SDK require key management solution or local Keyring. Keyring is designed to support keys for standardized algorithms.

When data is obtained from Data Access Interface, it is transformed to appropriate form. That includes decryption of the data, where every record is decrypted with the corresponding key from Keyring.

## Claims

1. A middleware system for securing data storage on multiple storage providers comprising Metadata Store, Fragment Access Layer, Data Access Interface and the Keyring.

2. The middleware system according to claim 1, wherein Metadata Store is used for provisioning instances of vertically fragmented databases on storage provider's side and mapping of obfuscated names, Fragment Access Layer for fragmenting and encrypting operations, Data Access Interface performs authorization for accessing the resources and the Keyring for storage of the encryption keys.

3. The middleware system according to claims 1-2, further comprising on-device encryption, preferably End-to-End encryption (E2EE) connected to Data Access Interface.

4. A method for securing data storage on a storage provider comprising steps of
a) classification of data by sensitivity
b) definition of fragments
c) provisioning fragmented schema on fragment locations
d) data obfuscation
e) maintaining connections to storage provider on storage provider's side
f) transforming data into standardized formats on the clients's side,
wherein
middleware system according to any claims 1-3 is used.
